# EUROPÄISCHE PATENTSCHRIFT

(11) **EP 0 418 685 B1**
(45) Veröffentlichungstag und Bekanntmachung des Hinweises auf die Patenterteilung: **22.06.1994**
(21) Anmeldenummer: 90117350.0
(22) Anmeldetag: 08.09.1990
(51) Int. Cl.: C08L 51/04, C08L 55/02, C08J 3/00

(54) **Verfahren zur Herstellung von Mischungen thermoplastischer Polymerisate in Pulverform.**
Process for the preparation of composition of thermoplastic polymers in powder form.
Procédé pour la préparation des compositions de polymères thermoplastiques sous forme de poudre.

(30) Priorität: 21.09.1989 DE 3931421
(43) Veröffentlichungstag der Anmeldung: 27.03.1991
(73) Patentinhaber: BAYER AG, 51368 Leverkusen (DE)
(72) Erfinder: Piejko, Karl-Erwin, Dr., D-5060 Bergisch Gladbach 2 (DE); Ott, Karl-Heinz, Dr., D-5090 Leverkusen 1 (DE); Lindner, Christian, Dr., D-5000 Koeln 80 (DE); Jansen, Ulrich, Dr., D-4047 Dormagen 5 (DE); Wittmann, Dieter, Dr., D-5000 Koeln 80 (DE)

(56) Entgegenhaltungen:
- EP-A- 0 338 360

## Beschreibung

Die Erfindung betrifft ein Verfahren zur Herstellung von Mischungen thermoplastischer Polymerisate in Pulverform aus wäßrigen Emulsionen der Polymerisate. Das Verfahren ist technisch besonders einfach und liefert pulverförmige Gemische mit verminderten Staubanteilen, verbesserter Rieselfähigkeit und Lagerbeständigkeit. Damit ist auch die Weiterverarbeitung entscheidend erleichtert.

Mischungen von thermoplastischen Harzen (z.B Copolymerisaten von Vinylverbindungen) und Pfropfpolymerisaten von Vinylverbindungen auf Kautschuke sowie Mischungen verschiedener Pfropfpolymerisate von Vinylverbindungen auf Kautschuke sind technisch wichtige thermoplastische Formmassen.

Viele dieser Harze und Pfropfpolymerisate müssen in wäßriger Emulsion erzeugt und daraus isoliert werden, da insbesondere die Pfropfpolymerisate als diskrete, vernetzte Mikroteilchen in Pulverform vorliegen sollen. Zur Herstellung von Formmassen, die Harze und Pfropfpolymerisate enthalten, kann man die Emulsionen der anfallenden Polymerisate vermischen und das Gemisch aufarbeiten. Die so gewonnene Polymerisatmischung - meist in Pulverform - besitzt vorteilhafte Eigenschaften für die Verarbeitung.

Für Mischungen in Pulverform sind die Pulvereigenschaften von Wichtigkeit: Beispielsweise ist häufig Staubfreiheit gefordert, die Korngrößenverteilung soll bestimmten Anforderungen angepaßt sein, die Pulver sollen nicht zum Zusammenbacken und Verklumpen neigen.

Man kann durch besondere - stufenweise - Koagulation ("Gradientenkoagulation") d.h. durch bestimmte aufeinander folgende Koagulationsschritte, die Pulvereigenschaften der Pulvermischung in gewissem Umfang beeinflussen.

In EP-PS 121 855, GB-PS 1 113 348 und GB-PS 1 568 469 werden Mischungen aus weichen und harten Polymerkomponenten in Pulverform so hergestellt, daß man durch "verzögerte" Koagulation des harten Polymeren eine Art Umhüllung der zum Zusammenkleben neigenden weichen Polymeranteile erreicht. In der EP-PS 121 854 ist die Bildung von grobteiligem Pulver aus feinteiligem harten Polymer mittels weicher Polymere in einer "Gradientenkoagulation" beschrieben.

Diese Verfahren sind technisch aufwendig und nur in besonderen Koagulationsanlagen mit entsprechender technischer Ausrüstung durchführbar.

Es wurde gefunden, daß man bei der Co-Koagulation wäßriger Emulsionen bestimmter Polymerisate reproduzierbar und ohne aufwendige Meß- und Regeltechnik einwandfreie pulverförmige Mischungen erhält, wenn man die Emulsionen gleichzeitig, aber getrennt koaguliert und sofort nach der Koagulation vermischt.

Gegenstand der Erfindung ist somit ein Verfahren zur Herstellung von Mischungen thermoplastischer Polymerisate in Pulverform aus wäßrigen Emulsionen von
a) 1 - 15 Gew.-% eines thermoplastischen Harzes, das ein Homo- oder Copolymerisat von Styrol, α-Methylstyrol, Methylmethacrylat oder Acrylnitril darstellt und gegebenenfalls bis zu 30 Gew.-% eines Kautschuks enthält, und
b) 99 - 85 Gew.-% eines kautschukreichen Pfropfpolymerisats von Styrol, α-Methylstyrol, Acrylnitril, Methylmethacrylat und/oder Alkylacrylat, auf einen Dien- oder Alkylacrylatkautschuk mit einem Kautschukgehalt von 50-90 Gew.-%,
das dadurch gekennzeichnet ist, daß man wäßrige Emulsionen von a) und b) mit Polymerisatgehalten von 15 bis 50 Gew.-% bei 50 bis 100°C gleichzeitig, aber in separaten Mengenströmen, kontinuierlich oder halbkontinuierlich mit einer Koagulationslösung unter Koagulation der Polymerisate a) und b) vermischt, die Mengenströme vereinigt und dann das Polymerisatgemisch abtrennt.

Bevorzugt können Mischungen aus 2-12 Gew.-%, vorzugsweise 5-10 Gew.-% der Komponente a) und 98-88 Gew.-%, vorzugsweise 95-90 Gew.-% der Komponente b) hergestellt werden.

Die Komponenten a) und b) der erfindungsgemäß hergestellten Mischung sind bekannt.

Komponente a) sind thermoplastische Harze, d.h. Homo- oder Copolymerisate von Styrol, α-Methylstyrol, Methylmethacrylat oder Acrylnitril; besonders geeignet sind Copolymerisate von Styrol und Acrylnitril, von α-Methylstyrol und Acrylnitril, von Styrol, α-Methylstyrol und Acrylnitril, von Methylmethacrylat und Styrol, von Methylmethacrylat und Acrylnitril sowie Polymethylmethacrylat. Komponente a) schließt auch solche Harze ein, die eine geringe Menge eines Kautschuk einpolymerisiert oder eingemischt enthalten; geeignete Kautschuke sind bekannte teilchenförmige, teilvernetzte Dienkautschuke oder Alkylacrylatkautschuke; die harzbildenden Monomere können auf den Kautschuk pfropfpolymerisiert sein, oder es kann eine Mischung aus Kautschuk und Harz vorliegen.

Auf jeden Fall darf der Kautschukgehalt der Komponente a) 30 Gew.-% nicht überschreiten, bevorzugt sind Kautschukgehalte bis 10 Gew.-%.

Die Komponente b) des erfindungsgemäßen Verfahrens stellt ein kautschukreiches Pfropfpolymerisat von Vinylverbindungen auf einen teilvernetzten, teilchenförmigen Kautschuk mit mittleren Teilchendurchmessern (d₅₀) von 0,05-1 »m dar; pfropfpolymerisierte Vinylverbindungen sind Styrol, α-Methylstyrol, Acrylnitril, Methylmethacrylat und Alkylacrylat oder deren Mischungen; besonders bevorzugt sind Methylmethacrylat sowie Mischungen von Styrol und Acrylnitril, von α-Methylstyrol und Acrylnitril, von Methylmethacrylat und Styrol, von Methylmethacrylat und Alkylacrylat, von α-Methylstyrol, Methylmethacrylat und Acrylnitril. Als Kautschuke der Komponenten b) (Pfropfgrundlagen) kommen Dienhomo-und -Copolymerisate z.B. von Butadien, Isopren, Chloropren, gegebenenfalls mit bis zu 35 Gew.-% Comonomeren wie Styrol, Acrylnitril, Methylmethacrylat, Alkylacrylat, Vinylmethylether in Betracht oder Alkylacrylat-Polymerisate (insbesondere von C₁-C₈-Alkylacrylaten), die gegebenenfalls bis zu 20 Gew.-% Vinylmonomere, wie Styrol, Acrylnitril, Vinylacetat, C₁-C₈-Alkylmethacrylat einpolymerisiert enthalten; die Acrylatkautschuke sind meist durch Einpolymerisieren polyfunktioneller Vinyl- oder Allylmonomere partiell vernetzt; vernetzende Monomere sind z.B. Bis-Acrylate, Bis-Acrylamide, Butadien, Acrylsäurevinylester, Triallylcyanurat, Trialkylisocyanurat, Zitronensäuretrisallylester, Bis-Carbonsäurevinylester.

Die Acrylatkautschuke enthalten die vernetzenden Monomere in Mengen bis maximal 5 Gew.-%. Die Kautschuke der Komponente b) können auch Kern/Mantel-Struktur besitzen, d.h. die Acrylatkautschukpartikel enthalten einen Kautschukkern, der sich strukturell von dem ihn umgebenden Acrylatkautschuk unterscheidet, oder einen harten Thermoplastharzkern.

Die Komponente b) enthält im allgemeinen 50-90 Gew.-% Kautschuk, bevorzugt 60-85 Gew.-%.

Die Komponenten a) und b) können in bekannter Weise durch Emulsionspolymerisation in wäßrigen Medien bzw. Emulsionspfropfpolymerisation in Gegenwart von Kautschuklatices hergestellt werden. Im Falle von kautschukfreien Polymerisaten a) werden die Monomere bei pH-Werten von ca. 12 bis 2, insbesondere von 10 bis 3, radikalisch in Gegenwart von Seifen (Emulgatoren) in wäßrigem Medium polymerisiert. Als Initiatoren kommen insbesondere wasserlösliche Radikalbildner wie Peroxodisulfate, Peroxodiphosphate, wasserlösliche Hydroperoxide und Peroxosäuren in Betracht, sowie Redoxinitiatorsysteme. Die Polymerisation, die normalerweise bei 40-90°C durchgeführt wird, erfordert die Anwesenheit eines ionischen Emulgators, insbesondere eines anionischen Emulgators, in Mengen bis zu 4 Gew.-%, bevorzugt bis zu 2 Gew.-%, bezogen auf die Monomere. Geeignete Emulgatoren sind beispielsweise Fettsäuresalze, Alkylsulfonsäuresalze mit längerkettigen Alkylresten und Schwefelsäurealkylhalbester mit längerkettigen Alkylresten.

Zur Herstellung von Pfropfpolymerisaten auf Kautschuke können die zu pfropfenden Monomere in Gegenwart einer wäßrigen Kautschukemulsion ähnlich wie oben beschrieben polymerisiert werden.

Für das erfindungsgemäße Verfahren werden wäßrige Emulsionen a) und b) eingesetzt mit Polymerfeststoffgehalten von 15-50 Gew.-%, vorzugsweise von 20-40 Gew.-%; besonsonders günstig sind zur Durchführung des erfindungsgemäßen Verfahrens Emulsionen von a) und b) mit etwa gleichem Polymerfeststoffgehalt, bevorzugt ca. 30-40 Gew.-% einzusetzen.

Das erfindungsgemäße Verfahren kann wie folgt durchgeführt werden:
In einen kontinuierlichen oder diskontinuierlichen Prozeß in einem oder in mehreren, hintereinander geschalteten Reaktoren werden die Latices der Komponenten a) und b) unter Rühren getrennt eingespeist. Im Reaktor befindet sich eine wäßrige Koagulationslösung. "Getrennt eingespeist" bedeutet, daß die beiden Emulsionen so in den Reaktor eingegeben werden, daß sie ohne sich zu vermischen in die Koagulationslösung gelangen. Dies läßt sich dadurch erreichen, daß man die Emulsionen über getrennte Einspeisevorrichtungen an verschiedenen Stellen des Reaktors eindosiert. Man arbeitet bevorzugt bei 50 bis 100°C, insbesondere bei 60 bis 98°C. Bevorzugt ist ein Verfahren, bei dem die Temperatur am Ende der Koagulation bzw. in der letzten Stufe des Verfahrens bei 90-98°C liegt. In einer bevorzugten Ausführungsform des Verfahrens liegt die Temperatur am Ende mindestens 10°C, insbesonders 15°C höher als die Temperatur zu Beginn der Fällung. Als Koagulationslösung verwendet man wäßrige Lösungen von wasserlöslichen anorganischen oder organischen Säuren und/oder Salzen, wie Salzsäure, Schwefelsäure, Phosphorsäure, Ameisensäure, Essigsäure, Propionsäure, Alkali- und Erdalkali-Chloride,-sulfate, -formiate, -acetate, -phosphate. Im allgemeinen benutzt man 0,5-15 Gew.-%ige wäßrige Lösungen, je nach zu koagulierender Latexmischung. Koagulationslösung, Emulsion von a) und Emulsion von b) müssen bei der angegebenen Temperatur intensiv vermischt werden, wobei bevorzugt so stark gerührt wird, daß stark turbulente Strömungen entstehen.

Arbeitet man in mehreren, hintereinander geschalteten Reaktoren, so dosiert man beide Emulsionen vorteilhaft in den ersten Reaktor; in den weiteren Reaktoren kann der bei der Koagulation gebildete Polymerisatbrei in Wasser bei den gleichen Temperaturen wie im ersten Reaktor oder auch bei höheren Temperaturen nachbehandelt werden. Durch diese Nachbehandlung kann man die Kornstruktur der Polymerisatpulver und die Teilchengrößenverteilung verbessern. Das erfindungsgemäße Verfahren benötigt Verweilzeiten von 15 Minuten bis 5 Stunden, bevorzugt von 1 Stunde bis 3 Stunden.

Der primär gebildete Polymerisatbrei kann in üblicher Weise z.B. durch Filtrieren oder Schleudern abgetrennt und dann gewaschen und getrocknet werden.

Dabei werden pulverförmige Polymerisatmischungen mit verbesserter Korngrößenverteilung erhalten, die sich beispielsweise durch besondere Rieselfähigkeit, gute Lagerstabilität und thermoplastische Verarbeitbarkeit bemerkbar macht. Da die Polymerisatmischungen als Zusätze zu bekannten thermoplastischen Kunststoffen wie Polyvinylchlorid und ABS verwendet werden, um deren Eigenschaften z.B. Kerbschlagzähigkeit und Wärmestandfestigkeit zu verbessern, ist es entscheidend, daß sich das Pulver gut in kontinuierlich arbeitende Verarbeitungsvorrichtungen für Thermoplaste einspeisen läßt, sich mit der Schmelze des thermoplastischen Kunststoffs bei hohen Temperaturen vermischt und darin gleichmäßig verteilt oder löst. Die erfindungsgemäßen Produkte besitzen diese Eigenschaften.

Die Staudinger-Indices und Gelgehalte wurde in Dimethylformamid ermittelt (vgl. dazu M. Hoffmann et al., "Polymeranalytik I und II", Georg Thieme Verlag, Stuttgart, 1977). Die Teilchendurchmesser sind d₅₀-Werte und durch Ultrazentrifugenmessung ermittelt (vgl. dazu W. Scholtan et al., Kolloidz. und Z. Polymere 250 (1972)).

### Beispiele

I. Eingesetzte Emulsionen
Komponente a1
Emulsion eines Polymerisats aus Methylmethacrylat mit einem Feststoffgehalt von 34 Gew.-% hergestellt mit dem Na-Salz von C₁₄-C₁₈-Alkylsulfonsäuren als Emulgator. Das isolierte Polymer besitzt einen Staudingerindex (in DMF bei 23°C ermittelt) von 0,5 dl/g.
Komponente a2
Emulsion eines Copolymerisats aus 72 Gew.-% Styrol und 28 Gew.-% Acrylnitril mit einem Feststoffgehalt von 35 Gew.-%, hergestellt mit dem Na-Salz von C₁₄-C₁₈-Alkylsulfonsäuren als Emulgator. Das isolierte Copolymer besitzt einen Staudingerindex (in DMF bei 23°C ermittelt) von 0,7 dl/g.
Komponente b1
Emulsion eines Pfropfpolymerisats aus 80 Gew.-% einer Polybutadienkautschukgrundlage mit einer mittleren Teilchengröße (d₅₀-Wert) von 360 nm und einem Gel-Gehalt von 93 Gew.-% und 20 Gew.-% einer darauf pfropfpolymerisierten Monomermischung aus 72 Gew.-% Styrol und 28 Gew.-% Acrylnitril. Die Emulsion besitzt einen Feststoffgehalt von 35 Gew.-%.
Komponente b2
Emulsion eines Pfropfpolymerisats aus 75 Gew.-% einer Polybutadienkautschukgrundlage mit einer mittleren Teilchengröße (d₅₀-Wert) von 360 nm und einem Gel-Gehalt von 93 Gew.-% und 25 Gew.-% einer darauf pfropfpolymerisierten Monomermischung aus 72 Gew.-% Styrol und 28 Gew.-% Acrylnitril. Die Emulsion besitzt einen Feststoffgehalt von 35 Gew.-%.
Komponente b3
Emulsion eines Pfropfpolymerisats aus 80 Gew.-% einer Polybutadienkautschukgrundlage mit einer mittleren Teilchengröße (d₅₀-Wert) von 360 nm und einem Gel-Gehalt von 93 Gew.-% und 20 Gew.-% einer darauf pfropfpolymerisierten Monomermischung aus 90 Gew.-% Methylmethacrylat und 10 Gew.-% Butylacrylat. Die Emulsion besitzt einen Feststoffgehalt von 37 Gew.-%.
Komponente b4
Emulsion eines Pfropfpolymerisats aus 80 Gew.-% einer Polybutylacrylatkautschukgrundlage, vernetzt mit Triallylcyanurat, mit einer mittleren Teilchengröße (d₅₀-Wert) von 530 nm und einem Gel-Gehalt von 90 Gew.-% und 20 Gew.-% darauf pfropfpolymerisierten Methylmethacrylat. Die Emulsion besitzt einen Feststoffgehalt von 35 Gew.-%.
II. Koagulation zu pulverförmigen Polymerisationsmischungen
Die folgenden Versuche zur Koagulation und Isolierung werden mit insgesamt 1000 Gew.-Teilen Polymerisat durchgeführt. Koagulationsmittel ist eine Lösung aus 5000 Gew.-Teilen Wasser und 200 Gew.-Teilen Magnesiumsulfat.
II.1 Erfindungsgemäßes Verfahren
Beispiele II.1.1 - II.1.5
In das auf 80°C erhitzte Koagulationsmittel werden unter schnellem Rühren mit einem Propellerrührer die Emulsionen von Polymer a) und von Polymer b), entsprechend den in Tabelle 1 angegebenen Feststoffanteilen über separate Zulaufeinrichtungen innerhalb von 1/2 Stunde eindosiert. Danach wird auf 95°C geheizt und 1/4 Stunde bei 95°C nachgerührt.

**Tabelle 1**

| Versuch-Nr. | Zulauf 1 | Zulauf 2 |
|---|---|---|
| | Emulsion/Gew.-Anteil bezogen auf Feststoff | Emulsion Gew.-Anteil bezogen auf Feststoff |
| II.1.1 | a 1/50 | b 1/950 |
| II.1.2 | a 1/50 | b 2/950 |
| II.1.3 | a 2/100 | b 2/900 |
| II.1.4 | a 1/50 | b 3/950 |
| II.1.5 | a 1/100 | b 4/900 |

Vergleichsversuche II.2.1 - II.2.4
Die Beispiele II.1.1, II.1.2, II,1.4, II.1,5 werden mit 1000 Gew.-Teilen an Polymerisatkomponente b1-b4 ohne Zulauf von Komponenten a wiederholt.
II.2 Vergleichsversuche II.2.5 - II.2.6
Die Beispiele II.1.1 und II.1.5 werden wiederholt, wobei die eingesetzten Emulsionen jedoch miteinander vermischt werden und als Mischung in das Koagulationsmittel eindosiert werden. Die weiteren Bedingungen sind wie oben angegeben.
III. Aufarbeitung und Eigenschaften der Polymerisate
Zur weiteren Aufarbeitung der nach II.1 und II.2 hergestellten Polymerisataufschlämmungen werden diese in einer Zentrifuge, Fa. Carl Padberg, Modell GT 300 (Innendurchmesser 300 mm; 1400 U/min) zentrifugiert, 15 min mit Wasser praktisch elektrolytfrei gewaschen und 15 min trockengeschleudert. Das erhaltene Feuchtgut wird bei 60°C getrocknet. Das trockene Polymerisat wird einem Druckbelastungstest unterworfen. Dazu wird in ein zylinderförmiges Rohr mit einem Innendurchmesser von 40 mm und einer Höhe von 60 mm Pulver bis zu einer Füllhöhe von 40 mm eingefüllt und mit einem Stempel (Durchmesser 38 mm) der Masse 3 kg 24 h bei Raumtemperatur belastet. Danach wird der Rohrinhalt vorsichtig nach unten herausgedrückt und beurteilt: Leicht fließende Pulver bilden dann einen kegelförmigen Haufen oder einen bereits bei Berühren zerfallenden Zylinder (Bewertung +), während Verbackungen oder Verklumpungen zu stabilen säulenförmigen Körpern führen (Bewertung -), die nur durch festen Druck mit der Hand zu zerteilen sind. Die Ergebnisse der Druckbelastungstests sind in Tabelle 2 aufgeführt.

**Tabelle 2**

| Pulvereigenschaften der erfindungsgemäßen (II.1) und Vergleichspolymerisate (II.2) | |
|---|---|
| Beispiel-Nr. | Belastungstest |
| II.1.1 | + |
| II.1.2 | + |
| II.1.3 | + |
| II.1.4 | + |
| II.1.5 | + |
| II.2.1 | - |
| II.2.2 | - |
| II.2.3 | - |
| II.2.4 | - |
| II.2.5 | - |
| II.2.6 | - |

## Patentansprüche

1. Verfahren zur Herstellung von Mischungen thermoplastischer Polymerisate in Pulverform aus wäßrigen Emulsionen von
a) 1-15 Gew.-% eines thermoplastischen Harzes, das ein Homo-oder Copolymerisat von Styrol, α-Methylstyrol, Methylmethacrylat oder Acrylnitril darstellt und gegebenenfalls bis zu 30 Gew.-% eines Kautschuks enthält und
b) 99-85 Gew.-% eines kautschukreichen Pfropfpolymerisats von Styrol, α-Methylstyrol, Acrylnitril, Methylmethacrylat und/oder Alkylacrylat auf einen Dien-oder Alkylacrylatkautschuk mit einem Kautschukgehalt von 50-90 Gew.-%,
dadurch gekennzeichnet, daß man wäßrige Emulsionen von a) und b) mit Polymerisatgehalten von 15 bis 50 Gew.-% bei 50 bis 100°C gleichzeitig, aber in separaten Mengenströmen, kontinuierlich oder halbkontinuierlich mit einer Koagulationslösung unter Koagulation der Polymerisate a) und b) vermischt, die Mengenströme vereinigt und dann das Polymerisatgemisch abtrennt.

## Claims

1. A process for the production of blends of thermoplastic polymers in powder form from aqueous emulsions of
a) 1 to 15% by weight of a thermoplastic resin in the form of a homopolymer or copolymer of styrene, α-methyl styrene, methyl methacrylate or acrylonitrile optionally containing up to 30% by weight of a rubber and
b) 99 to 85% by weight of a rubber-rich graft polymer of styrene, α-methyl styrene, acrylonitrile, methyl methacrylate and/or alkyl acrylate on a diene or alkyl acrylate rubber with a rubber content of 50 to 90% by weight,
characterized in that aqueous emulsions of a) and b) with polymer contents of 15 to 50% by weight are continuously or semicontinuously mixed simultaneously, but in separate streams, with a coagulation solution at temperatures of 50 to 100°C so that polymers a) and b) are coagulated, after which the streams are combined and the polymer blend is subsequently removed.

## Revendications

1. Procédé de production de mélanges de polymères thermoplastiques sous forme de poudre à partir d'émulsions aqueuses
a) de 1 à 15 % en poids d'une résine thermoplastique qui représente un homopolymère ou un copolymère de styrène, d'α-méthylstyrène, de méthacrylate de méthyle ou d'acrylonitrile et qui contient le cas échéant jusqu'à 30 % en poids de caoutchouc et
b) de 99 à 85 % en poids d'un polymère greffé, riche en caoutchouc, de styrène, d'α-méthylstyrène, d'acrylonitrile, de méthacrylate de méthyle et/ou d'acrylate d'alkyle sur un caoutchouc diénique ou d'acrylate d'alkyle ayant une teneur en caoutchouc de 50 à 90 % en poids,
caractérisé en ce qu'on mélange des émulsions aqueuses de a) et b) ayant des teneurs en polymères de 15 à 50 % en poids, à 50-100°C, simultanément mais en courants séparés, en continu ou en semi-continu avec une solution coagulante entraînant la coagulation des polymères a) et b), on réunit les courants puis on sépare le mélange de polymères.
